# EUROPÄISCHE PATENTSCHRIFT

(11) **EP 3 543 182 B1**
(45) Veröffentlichungstag und Bekanntmachung des Hinweises auf die Patenterteilung: **18.10.2023**
(21) Anmeldenummer: 19155833.7
(22) Anmeldetag: 06.02.2019
(51) Int. Cl.: B65G 47/244, B65G 47/64, B65G 13/10, B65G 29/00, B65G 47/80, B65G 39/02

(54) **VORRICHTUNG ZUM FÖRDERN, DREHEN UND VERSCHIEBEN VON STÜCKGUT**
DEVICE FOR CONVEYING, TURNING AND MOVING ARTICLES
DISPOSITIF DE TRANSPORT, DE ROTATION ET DE DÉPLACEMENT DES MARCHANDISES

(30) Priorität: 01.03.2018 DE 102018104748
(43) Veröffentlichungstag der Anmeldung: 25.09.2019
(73) Patentinhaber: MBA Instruments GmbH, 25451 Quickborn (DE)
(72) Erfinder: Wesenberg, Stefan, 25337 Elmshorn (DE)
(74) Vertreter: Jaeschke, Rainer

(56) Entgegenhaltungen:
- EP-A1- 0 546 424
- EP-A1- 3 196 154
- WO-A1-2016/196087
- DE-B- 1 078 484
- JP-A- S5 457 758
- US-A- 5 000 305
- US-A- 5 240 102

## Beschreibung

Die Erfindung betrifft eine Vorrichtung zum Fördern, Drehen und Verschieben von Stückgut.

Solche Vorrichtungen werden benötigt, um einzelne auf einer Transporteinrichtung liegende Stückgüter, wie Kartons, Trays, Schrumpfgebinde oder Säcke auszurichten, damit sie später in einfacher Weise palettiert oder weitertransportiert werden können. Die Transporteinrichtung ist in der Regel als Förderband, als Kettenförderer oder Rollenförderer ausgebildet, auf dem das Stückgut in einer beliebigen Lage in einer horizontalen Förderrichtung transportiert werden. Durch eine Vorrichtung der eingangs geschilderten Art sollen die Stückgüter in einer gewünschten Weise so ausgerichtet werden, dass sie platzsparend auf einer Palette gestapelt werden können.

Es ist aus der DE 20 2011 110 089 U1 eine Vorrichtung zum Drehen von eckigen Gegenständen bekannt, die zwischen zwei Transporteinrichtungen zwei parallele Förderbänder aufweist, die mit unterschiedlicher Geschwindigkeit laufen können. Damit ist es möglich, einen Gegenstand um seine vertikale Achse zu verdrehen und auszurichten. Ein Verschieben quer zur Förderrichtung ist hier nicht möglich.

Weiterhin ist es bekannt, das auf einem Förderband liegende Stückgut mit einem Greifer zu umfassen und um seine vertikale Achse zu verdrehen. Auch kann der Greifer das Stückgut seitlich versetzen. Allerdings ist der hierfür benötigte Roboter aufwändig anzusteuern. Auch benötigen das Umfassen des Stückguts und das anschließende Ausrichten eine relativ lange Zeit. Aus der DE 44 27 488 A1 ist die Ausbildung des Greifers als Sauggreifers bekannt, mit dem das Stückgut ergriffen werden kann.

Aus der US 5,000,305 A ist eine Vorrichtung mit einem Drehteller bekannt, an dem Kugeln drehbar gelagert sind, die sowohl die Unterseite als auch die Oberseite des Drehtellers überragen. Unter dem Drehteller ist ein Förderband vorgesehen, mit dem die Kugeln angetrieben werden. Durch ein Verdrehen des Drehtellers um eine vertikale Achse wird ein darauf liegender Gegenstand ebenfalls verdreht. Ein seitlicher Versatz ist jedoch nicht möglich. Die US 5,000,305 A offenbart die Merkmale des Oberbegriffs des Anspruchs 1.

Der Erfindung liegt die Aufgabe zugrunde, eine Vorrichtung der eingangs geschilderten Art so auszubilden, dass zum einen ein schnelles Verdrehen des ankommenden Stückguts im Zuge der Förderbewegung möglich ist. Zum andern soll auch ein seitlicher Versatz des Stückguts auf der Transporteinrichtung möglich sein.

Die Aufgabe wird gemäß der Erfindung dadurch gelöst, die Vorrichtung ein Maschinengestell und einen horizontal ausgerichteten Drehteller aufweist, der zwischen zwei beabstandeten Transporteinrichtungen in dem dadurch gebildeten Freiraum angeordnet ist, dass an dem Drehteller mehrere frei drehbare Kugeln gelagert sind derart, dass die oberen Kugelabschnitte und die unteren Kugelabschnitte über die Flachseite des Drehtellers hinausragen, dass ein Förderband unterhalb des Drehtellers angeordnet ist derart, dass der obere Trum des Förderbands in Kontakt mit den unteren Kugelabschnitten des Drehtellers steht und sich entgegen der Förderrichtung der Transporteinrichtungen bewegt, dass der Drehteller an einem Schlitten angeordnet ist, der an dem Maschinengestell quer zur Förderrichtung hin- und herverschiebbar ist und den Drehteller auf dem Förderband verschiebt, um das Stückgut quer zur Förderrichtung zu verschieben, und dass Antriebsmittel auf dem Schlitten vorhanden sind, die den Drehteller um seine vertikale Achse verdrehen, um das Stückgut zu verdrehen. Hierdurch wird zum einen ein seitlicher Versatz des Stückguts ermöglicht. Durch das Förderband werden die Rollen in Drehbewegung versetzt, so dass das Stückgut weiter in Förderrichtung transportiert wird. Gleichzeitig kann das Stückgut seitlich verschoben werden. Diese Anordnung ist insbesondere dann zweckmäßig, wenn die Stückgüter bereits ausgerichtet auf der Transporteinrichtung liegen. Es ist vorgesehen, dass der Schlitten den Drehteller auf dem Förderband verschiebt. Dann unterstützen die Kugeln die Verschiebebewegung des Stückguts.

Weiterhin kann das Stückgut in einfacher Weise und im Zuge der Förderbewegung um seine vertikale Achse verdreht werden. Der Drehteller mit seinen Kugeln erlaubt sowohl einen seitlichen Versatz des Stückguts als auch dessen Drehung um die vertikale Achse während der Förderbewegung.

Es ist vorgesehen, dass die Antriebsmittel den Drehteller in der horizontalen Ebene halten. Der Drehteller wird somit mittels der Antriebsmittel drehbar in Position über dem Förderband gehalten.

Gemäß einer Ausführungsform der Erfindung ist vorgesehen, dass die Antriebsmittel für den Drehteller wenigstens einen Riemen umfassen, der an der äußeren Umfangsfläche des Drehtellers angreift, um den Drehteller um seine vertikale Drehachse zu verdrehen. Der Riemen liegt entlang eines Teilumfangs an der Umfangsfläche des Drehtellers an und wird dort durch wenigstens zwei Andruckrollen an die Umfangsfläche gedrückt, so dass der Drehantrieb des Drehtellers erfolgen kann.

Es kann vorgesehen werden, dass der Riemen über wenigstens drei und insbesondere vier in Umfangsrichtung beabstandete Andruckrollen an der Umfangsfläche des Drehtellers angreift. Es können auch zwei Riemen vorhanden sein, von denen jeweils einer mit zwei Andruckrollen an die Umfangsfläche gedrückt wird. Die Riemen sind auf gegenüberliegenden Seiten des Drehtellers angeordnet und halten diesen somit in Position über dem Förderband, das die Kugeln antreibt.

Der oder die Riemen können auch als Zahnriemen mit außen und/oder innen liegender Verzahnung ausgebildet sein, um einen formschlüssigen Antrieb des Drehtellers zu ermöglichen.

Es kann auch vorgesehen werden, dass die Antriebsmittel für den Drehteller wenigstens ein Zahnrad aufweisen, das in eine korrespondierende Verzahnung am Drehteller eingreift, um den Drehteller um seine vertikale Drehachse zu verdrehen. Dies erlaubt einen formschlüssigen und somit drehwinkelgenauen Antrieb des Drehtellers.

Es kann auch vorgesehen werden, dass die Antriebsmittel für den Drehteller wenigstens ein Reibrad aufweisen, das an der äußeren Umfangsfläche am Drehteller reibschlüssig anliegt, um den Drehteller um seine vertikale Drehachse zu verdrehen. Dies erlaubt eine geräuscharme Verdrehung des Drehtellers auf dem Förderband.

In jedem Fall ist es zweckmäßig, dass wenigstens drei und insbesondere vier in Umfangsrichtung beabstandete Zahnräder oder Reibräder vorhanden sind. Der Abstand der benachbarten Zahn- oder Reibräder ist dabei kleiner als der Durchmesser der Drehteller, so dass diese sicher über dem Förderband positioniert bleibt.

Gemäß einer günstigen Ausführungsform der Erfindung ist vorgesehen, dass der Durchmesser des Drehtellers der Breite der Transporteinrichtung entspricht oder größer ist. Damit ist es möglich, dass das Stückgut auf den Drehteller unabhängig von der Ausgangslage über die gesamte Breite der Transporteinrichtung verschoben und/oder verdreht werden kann. Ein gezieltes Ausrichten und seitliches Verschieben des Stückguts ist damit möglich.

Der Drehteller ist vorzugsweise um einen Weg verschiebbar, der ausreicht, um ein Stückgut von der einen Seite der Transporteinrichtung zu der gegenüberliegenden Seite zu verschieben. Sofern der Schlitten nur den Drehteller verschiebt, reicht bereits eine relativ kleine Verschiebung aus, um das Stückgut relativ weit seitlich zu versetzen, da die Kugeln den Verschiebeweg des Stückguts auf deren Oberseite vergrößern.

Gemäß einer möglichen Ausführungsform der Erfindung ist vorgesehen, dass der Drehteller einen Rahmen umfasst, der eine Vielzahl von Ausnehmungen aufweist, in denen die Kugeln verliersicher gehalten sind. Zweckmäßig ist es, wenn der Drehteller sich aus wenigstens zwei horizontalen Lochscheiben zusammensetzt, deren im Querschnitt kreisrunde Ausnehmungen in der montierten Lage in einer Flucht liegen und die Aufnahmen für die Kugeln bilden, dass die Ausnehmungen zumindest der obersten und untersten Lochscheibe die Kontur einer Kugelzone aufweisen und dass der Durchmesser der die Kugelzone bildenden Hohlkugel dem Durchmesser der Kugeln entspricht oder geringfügig größer ist. Dadurch wird die Herstellung des Drehtellers erleichtert, da jede Lochscheibe gut mit den kugelzonenförmigen Ausnehmungen versehen werden kann. Die obere beziehungsweise untere Abschnitt der kugelförmigen Ausnehmungen fehlen, so dass die eingesetzte Kugel aus der freien Oberfläche der Lochschiebe hinausragt, ohne herauszufallen.

Aus welchem Material die einzelnen Lochscheiben bestehen, ist grundsätzlich beliebig. Für eine gute Steifigkeit ist es zweckmäßig, wenn die Lochscheiben aus Metall, beispielsweise aus Aluminium oder Stahl, bestehen. Es kann aber auch zweckmäßig sein, wenn zumindest die oberste und die unterste Lochscheibe aus einem Kunststoff bestehen. Hierdurch wird eine reibungsarme und geräuscharme Lagerung der Kugeln in den jeweiligen Ausnehmungen des Drehtellers ermöglicht.

Weiterhin ist es günstig, wenn zwischen der untersten und obersten Lochscheibe wenigstens eine mittlere Lochscheibe vorhanden ist, die mit kreiszylindrischen Durchbrechungen versehen ist, die mit den Ausnehmungen fluchten und einen Durchmesser aufweisen, der dem Durchmesser der Kugeln entspricht oder geringfügig größer ist. Diese mittlere Lochscheibe kann aus Metall, beispielsweise Stahl oder Aluminium bestehen und gibt dem Drehteller die gewünschte Steifigkeit. Die mittlere Lochscheibe kann aber auch aus Kunststoff, beispielsweise POM (Polyoxymethylen), bestehen. Die oberste und unterste Lochscheibe können dabei ebenfalls aus Kunststoff oder aus Metall bestehen. Auch kann die mittlere Lochscheibe im Durchmesser größer sein als die obersten und untersten Lochscheiben und die gewünschte äußere Umfangsfläche aufweisen, an der die Antriebsmittel zum Verdrehen des Drehtellers angreifen.

Weiterhin ist gemäß der Erfindung vorgesehen, dass die Oberfläche der Kugeln glatt oder rau ist. Auch kann es günstig sein, wenn die Oberfläche der Kugeln mit einem rutschfesten Belag beschichtet ist. Dadurch wird die Reibung der Kugeln an dem Förderband einerseits und an dem Stückgut anderseits erhöht, so dass die Bewegungen des Förderbands und des Schlittens und auch die Drehbewegung des Drehtellers sicher über die Kugeln an das Stückgut übertragen werden. Ein sicheres Verdrehen und Versetzen des Stückguts ist damit möglich.

Die Vorrichtung ist platzsparend und kann in einfacher Weise zwischen zwei Transportbändern angeordnet werden. Auf dem in Förderrichtung vorderen Transportband liegen die Stückgüter in beliebiger Ausrichtung an einer beliebigen Stelle des Transportbands mit der "richtigen" Seite nach oben. Auf der erfindungsgemäßen Förder-, Dreh- und Verschiebevorrichtung werden die Stückgüter in der horizontalen Ebene richtig ausgerichtet und verschoben, so dass sie auf dem in Förderrichtung hinteren Transportband in der richtigen und gewünschten Ausrichtung an der gewünschten seitlichen Position liegen. In dieser Position und Ausrichtung können die einzelnen Stückgüter zu einer Lage der zu bildenden Palette zusammengeschoben werden.

Die Erfindung wird im Folgenden anhand der schematischen Zeichnung näher erläutert. Es zeigen:
- Fig. 1: die Draufsicht auf eine Vorrichtung gemäß der Erfindung,
- Fig. 2: die Seitenansicht der Vorrichtung in Figur 1,
- Fig. 3: einen Schnitt durch die Drehschiebe in einer ersten Ausführungsform und
- Fig. 4: einen Schnitt durch die Drehschiebe in einer zweiten Ausführungsform.

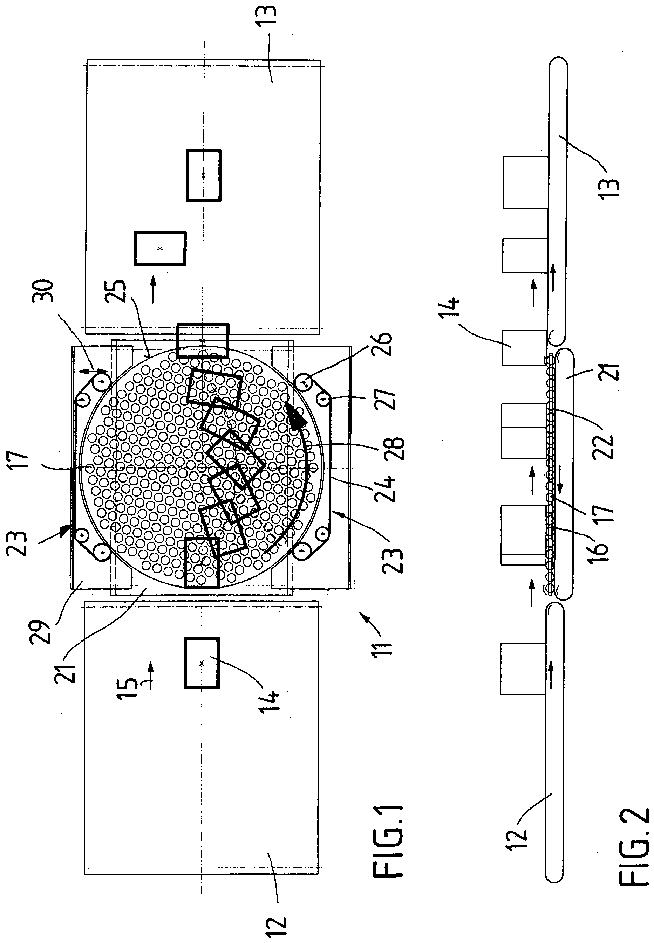

Die in der Zeichnung dargestellte Förder-, Dreh- und Verschiebevorrichtung 11 ist zwischen einem vorderen Transportband 12 und einem hinteren Transportband 13 angeordnet, durch die die Stückgüter 14 in der Förderrichtung 15 transportiert werden. Die Vorrichtung 11 weist einen Drehteller 16 auf, mit dem die Stückgüter 14 in der horizontalen Ebene (der Zeichenebene der Figur 1) um eine vertikale Achse verdreht und quer zur Förderrichtung 15 verschoben werden können.

Im Einzelnen ist die Anordnung so getroffen, dass der Drehteller 16 eine Vielzahl von Kugeln 17 trägt, die in Ausnehmungen 18 gehalten sind derart, dass die oberen und unteren Kugelabschnitte 19, 20 der Kugeln über die gegenüberliegenden Flachseiten des Drehtellers 16 hinausragen. Der Drehteller 16 liegt mit den unteren Kugelabschnitten 19 der Kugeln 17 auf dem oberen Trum 22 eines Förderbands 21, der sich entgegen der Förderrichtung 15 bewegt. Der Drehteller 16 wird in dieser Position auf dem Förderband durch Antriebsmittel 23 gehalten. Die Höhe des Förderbands 21 ist so gewählt, dass die oberen Kugelabschnitte 18 der Kugeln 17 in einer Ebene zu der Transportbandebene liegen. Damit werden die Stückgüter 14 sicher von dem vorderen Transportband 12 auf den Drehteller 16 und von diesem auf das hintere Transportband 13 übergeben.

Die Antriebsmittel 23 umfassen zwei Riemen 24, die auf gegenüberliegenden Seiten des Drehtellers 16 an dessen Umfangsfläche 25 anliegen. Die Riemen 24 werden jeweils über zwei Andruckrollen 26 an die Umfangsfläche 25 des Drehtellers 16 gedrückt. Zwei weitere Umlenkrollen 27 je Riemen, die in einem Abstand zum Drehteller 16 angeordnet sind, erlauben einen großen Umschlingungswinkel der Riemen 24 an der Umfangsfläche des Drehtellers. Damit ist ein sicherer Drehantrieb des Drehtellers 16 in oder entgegengesetzt der Drehrichtung 28 möglich.

Die Antriebsmittel 23 sind auf einem Schlitten 29 angeordnet, der quer und insbesondere senkrecht zur Förderrichtung 15 in Richtung des Doppelpfeils 30 hin- und herbewegbar an dem nicht gezeigten Maschinengestell gelagert ist. Der Schlitten 29 verschiebt den Drehteller 16 auf dem Förderband 21.

Diese Ausbildung der erfindungsgemäßen Vorrichtung 11 erlaubt einen weiteren Transport des Stückguts 14 über den Drehteller 16 in Förderrichtung 15. Das Förderband 21 dreht die Kugeln 17 derart, dass sich die oberen Kugelabschnitte in Förderrichtung 15 drehen. Das Stückgut 14 bewegt sich somit über die Kugeln 17 weiter in Richtung auf das hintere Transportband 13. Das Förderband 21 bewegt sich dabei mit der halben Geschwindigkeit der Transportbänder 12, 13, so dass die oberen Kugelabschnitte 19 die gleiche Geschwindigkeit und die gleiche Transportrichtung wie die Transportbänder besitzen.

Weiterhin kann durch die Drehung des Drehtellers 16 ein Verdrehen eines Stückguts 14 erfolgen. So kann beispielsweise ein längs auf dem vorderen Transportband 12 ausgerichtetes Stückgut quer ausgerichtet werden und so auf das hintere Transportband übergeben werden. Dafür werden die Antriebsmittel 23 entsprechend angesteuert, um den Drehteller 16 zu verdrehen. Der Drehteller 16 wird durch die Antriebsmittel 23 sicher in seiner Position über dem Förderband 21 gehalten.

Schließlich kann durch ein Verschieben des Schlittens 29 quer zur Förderrichtung 15 das Stückgut 14 auf dem Drehteller 16 seitlich versetzt werden. Beispielsweis kann ein mittig auf dem vorderen Transportband 12 liegendes Stückgut seitlich auf die in der Figur 1 obere Seite des hinteren Transportbands 13 verschoben werden. Das hintere Transportband 13 kann in Längsrichtung auch geteilt sein, um verschiedene Transport- oder Sortierfunktionen der ausgerichteten Stückgüter zu ermöglichen.

Diese für ein gezieltes Ausrichten und Verschieben eines Stückguts 14 erforderlichen Bewegungen können im Zuge der Transportbewegung ohne Zeitverlust erfolgen. Auch kann die Vorrichtung 11 platzsparend zwischen zwei Transportbändern 12, 13 angeordnet werden.

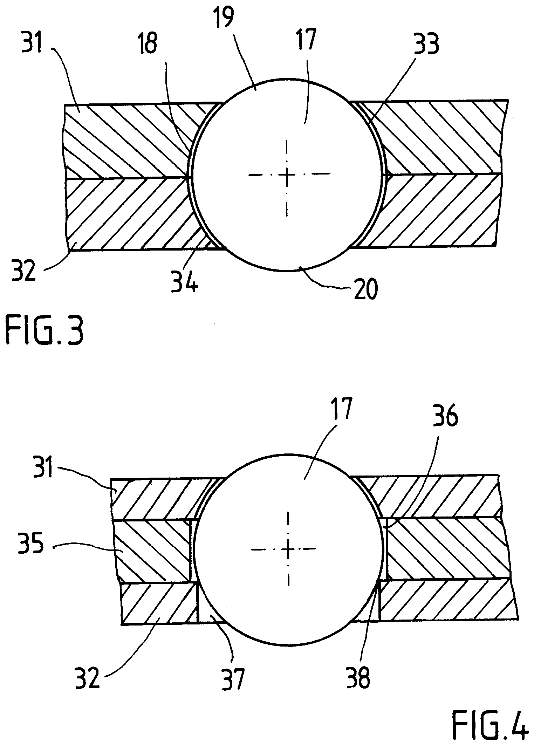

Der Drehteller 16 weist eine Vielzahl von Ausnehmungen 18 auf, in denen die Kugeln 17 verliersicher gehalten sind. Bei der in Figur 3 gezeigten Ausführungsform setzt sich der Drehteller 16 aus einer obersten und einer untersten Lochscheibe 31, 32 zusammen, die jeweils mit fluchtenden Ausnehmungen 33, 34 versehen sind. Die Ausnehmungen 33, 34 sind jeweils kugelzonenförmig ausgebildet, so dass sie in der zusammengesetzten und in der Figur 1 gezeigten Lage die kugelzonenförmige Aufnahme 18 für die Kugel 17 bilden. Die Kugel wird somit sicher und frei drehbar an dem Drehteller 16 gehalten. Die oberen und unteren Kugelabschnitte 19, 20 der Kugeln 17 liegen dabei frei.

Bei der in Figur 4 gezeigten Ausführungsform ist zwischen der obersten und untersten Lochscheibe 31, 32 eine mittlere Lochscheibe 35 vorhanden, die kreiszylindrische Durchbrechungen 36 aufweist, die mit den Ausnehmungen 33, 34 der obersten und untersten Lochscheiben 31, 32 in einer Flucht liegen. Auch dadurch wird die Aufnahme für die Kugel 17 gebildet. Die Kontaktfläche wird zudem reduziert, so dass sich die Kugel 17 reibungsarm in der Aufnahme drehen kann.

Anstelle einer kugelzonenförmigen Ausbildung der Ausnehmungen 33, 34 können auch kreiszylindrische Durchbrechungen 37 in den obersten und untersten Lochscheiben 31, 32 vorgesehen werden, deren der Kugel zugewandte Öffnung einen Durchmesser aufweist, der dem entsprechenden Kleinkreisdurchmesser der Kugel 17 entspricht oder geringfügig größer ist. Auch damit kann die Kugel 17 sicher an dem Drehteller 16 mit kleinster Kontaktfläche gehalten werden. Die an der Kugeloberfläche anliegende umlaufende Kante 38 kann dabei entgratet oder abgerundet sein, um die Oberfläche der Kugel nicht zu beschädigen. Diese Ausführungsform ist in Figur 4 bei der untersten Lochscheibe 32 gezeigt. Diese Ausbildung ist besonders günstig herzustellen, da lediglich zylindrische Bohrungen 36, 37 in den Lochscheiben anzufertigen sind.

## Patentansprüche

1. Vorrichtung zum Fördern, Drehen und Verschieben von Stückgut, wobei die Vorrichtung (11) ein Maschinengestell und einen horizontal ausgerichteten Drehteller (16) aufweist, der zwischen zwei beabstandeten Transporteinrichtungen (12, 13) in dem dadurch gebildeten Freiraum angeordnet ist, dass an dem Drehteller (16) mehrere frei drehbare Kugeln (17) gelagert sind derart, dass die oberen Kugelabschnitte (19) und die unteren Kugelabschnitte (20) über die Flachseiten des Drehtellers (16) hinausragen, dass ein Förderband (21) unterhalb des Drehtellers (16) angeordnet ist derart, dass der obere Trum (22) des Förderbands (21) in Kontakt mit den unteren Kugelabschnitten (20) steht und sich entgegen der Förderrichtung (15) der Transporteinrichtungen (12, 13) bewegt, dass der Drehteller (16) an einem Schlitten (29) angeordnet ist, der an dem Maschinengestell quer zur Förderrichtung hin- und herverschiebbar ist, um das Stückgut (14) quer zur Förderrichtung (15) zu verschieben, und dass Antriebsmittel (23) auf dem Schlitten (29) vorhanden sind, die den Drehteller (16) um seine vertikale Achse verdrehen, um das Stückgut (14) zu verdrehen,
**dadurch gekennzeichnet, dass**
der Schlitten (29) den Drehteller (16) auf dem Förderband (21) verschiebt.

2. Vorrichtung nach Anspruch 1, **dadurch gekennzeichnet, dass** die Antriebsmittel (23) für den Drehteller wenigstens einen Riemen (24) umfassen, der an der äußeren Umfangsfläche (25) des Drehtellers (16) angreift, um den Drehteller um seine vertikale Drehachse zu verdrehen.

3. Vorrichtung nach Anspruch 2 oder 3, **dadurch gekennzeichnet, dass** die Antriebsmittel für den Drehteller wenigstens ein Zahnrad aufweisen, das in eine korrespondierende Verzahnung am Drehteller eingreift, um den Drehteller um seine vertikale Drehachse zu verdrehen.

4. Vorrichtung nach Anspruch 2 oder 3, **dadurch gekennzeichnet, dass** die Antriebsmittel für den Drehteller wenigstens ein Reibrad aufweisen, das an der äußeren Umfangsfläche am Drehteller reibschlüssig anliegt, um den Drehteller um seine vertikale Drehachse zu verdrehen.

5. Vorrichtung nach Anspruch 2, **dadurch gekennzeichnet, dass** der Riemen (24) an wenigstens drei und insbesondere vier in Umfangsrichtung beabstandeten Stellen (bei 26) an der Umfangsfläche (25) des Drehtellers (16) angreift.

6. Vorrichtung nach einem der Ansprüche 1 bis 5, **dadurch gekennzeichnet, dass** der Durchmesser des Drehtellers (16) der Breite der Transporteinrichtung (12, 13) entspricht oder größer ist.

7. Vorrichtung nach einem der Ansprüche 1 bis 6, **dadurch gekennzeichnet, dass** der Drehteller (16) einen Rahmen umfasst, der eine Vielzahl von Ausnehmungen (18) aufweist, in denen die Kugeln (17) verliersicher gehalten sind.

8. Vorrichtung nach Anspruch 1 bis 7, **dadurch gekennzeichnet, dass** der Drehteller (16) sich aus wenigstens zwei horizontalen Lochscheiben (31, 32) zusammensetzt, deren im Querschnitt kreisrunde Ausnehmungen (33, 34) in der montierten Lage in einer Flucht liegen und die Aufnahmen (18) für die Kugeln (17) bilden, und dass die Ausnehmungen (33, 34) zumindest der obersten und untersten Lochscheibe (31, 32) die Kontur einer Kugelzone aufweisen und dass der Durchmesser der die Kugelzone bildenden Hohlkugel dem Durchmesser der Kugeln (17) entspricht oder geringfügig größer ist.

9. Vorrichtung nach Anspruch 8, **dadurch gekennzeichnet, dass** zwischen der untersten und obersten Lochscheibe (31, 32) wenigstens eine mittlere Lochscheibe (35) vorhanden ist, die mit kreiszylindrischen Durchbrechungen (36) versehen ist, die mit den Ausnehmungen (33, 34) in den obersten und untersten Lochscheiben (31, 32) fluchten und einen Durchmesser aufweisen, der dem Durchmesser der Kugeln (17) entspricht oder geringfügig größer ist.

10. Vorrichtung nach Anspruch 1 bis 9, **dadurch gekennzeichnet, dass** der Drehteller (16) sich aus einer obersten und einer untersten Lochscheibe (31, 32) sowie wenigstens einer mittleren Lochscheibe (35) zusammensetzt, dass die übereinander liegenden Lochscheiben (31, 32, 35) kreiszylindrische Durchbrechungen (36, 37) aufweisen, die in der montierten Lage in einer Flucht liegen, dass die Durchbrechung 36 der mittleren Lochscheibe (35) einen Durchmesser aufweist, der dem Durchmesser der Kugeln (17) entspricht oder geringfügig größer ist, dass der Durchmesser der der mittleren Lochscheibe (35) zugewandten Öffnung der kreiszylindrischen Durchbrechung (37) der obersten und/oder untersten Lochscheibe (31, 32) kleiner ist als der Durchmesser der Kugel (17) und einem Kleinkreisdurchmesser der Kugel (17) entspricht oder geringfügig größer ist.

11. Vorrichtung nach einem der Ansprüche 1 bis 10, **dadurch gekennzeichnet, dass** die Oberfläche der Kugeln (17) rau ist oder mit einem rutschfesten Belag beschichtet ist.

## Claims

1. A device for conveying, turning and moving articles, which device (11) having a machine frame and a horizontally oriented rotary table (16) which is arranged between two spaced transport devices (12, 13) within the free space so constituted, that several freely rotatable speres (17) are arranged on said rotary table (16) such that the superior sphere segments (19) and the inferior sphere segments (20) extend beyond the flat faces of said rotary table (16), that a conveyor belt (21) below said rotary table (16) is arranged such that the superior branch (22) of said conveyor belt (21) is in contact with the inferior sphere segments (20) and moves in the opposite direction of the conveying direction (15) of the transport devices (12, 13), that the rotary table (16) is arranged on a slide (29) which is movable back and forth transversally to the conveying direction, in order to move the articles (14) transversally to the conveying direction (15) and that drive means (23) are provided on said slide (29), which turn the rotary table (16) around its vertical axis in order to turn the articles (14), **characterised in that** said slide (29) moves the rotary tables (16) on the conveyor belt (21).

2. The device according to claim 1, **characterised in that** said drive means (23) for the rotary table (16) includes at least one belt (24) which applies on the exterior peripheral surface (25) of the rotary table (16) in order to turn said rotary table around its vertical rotation axis.

3. The device according to claim 2 or 3, **characterised in that** the drive means for the rotary table have at least one gear wheel which engages in a corresponding indentation on the rotary table in order to turn said rotary table around its vertical rotation axis.

4. The device according to claim 2 or 3, **characterised in that** said drive means for the rotary table are provided with at least one friction wheel which is frictionally adjacent to the exterior peripheral surface in order to turn said rotary table around its vertical rotation axis.

5. The device according to claim 2, **characterised in that** the belt (24) applied on at least three and in particular four spots (at 26) spaced in the peripheral direction on the peripheral surface (25) of said rotary table (16).

6. The device according to one of claims 1 to 5, **characterised in that** the diameter of said rotary table (16) corresponds to or is bigger than the width of the transport device (12, 13).

7. The device according to one of the claims 1 to 6, **characterised in that** the rotary table (16) includes a frame which has a plurality of recesses (18) where said spheres (17) are held in a loss-proof manner.

8. The device according to claims 1 to 7, **characterised in that** the rotary table (16) is composed of at least two horizontal hole discs (31, 32) the recesses (33, 34) of which with their circular cross sections are aligned when being mounted and constitute the seats (18) for the spheres (17), and that the recesses (33, 34) at least of the most superior and most inferior hole disc (31, 32) have the outline of a spheric zone and that the hollow sphere constituting the cross section of the spheric zone corresponds to or is slightly bigger than the cross section of the spheres (17).

9. The device according to claim 8, **characterised in that** at least one middle hole disc (35) is provided between the utmost inferior and the utmost superior hollow disc (31, 32) and which is provided with circular, cylindric perforations (36) which align with the recesses (33, 34) in the utmost superior and the utmost inferior hole discs (31, 32) and have a diameter which corresponds to or is slightly bigger than the diameter of the spheres (17).

10. The device according to claims 1 to 9, **characterised in that** the rotary table (16) is composed of an utmost superior and an utmost inferior hole disc (31, 32) as well as at least one middle hole disc (35), that the piled hole discs (31, 32, 35) are provided with circular, cylindric perforations (36, 37) which are aligned when being mounted, that said perforations 36 of the middle hole disc (35) have a diameter which corresponds to or is slightly bigger than the diameter of the spheres (17), that the diameter of the opening of the circular, cylindric perforation (37) of the utmost superior and/or the utmost inferior hole disc (31, 32) faces the middle hole disc (35) and is smaller than the diameter of the sphere (17) and corresponds to or is slightly bigger than a small circle diameter of the sphere (17).

11. The device according to one of the claims 1 to 10, **characterised in that** the surface of the sphere (17) is rough or coated with a non-slip coating.

## Revendications

1. Dispositif de transport, de rotation et de déplacement des marchandises, le dispositif (11) ayant un bâti de machine et un plateau rotatif (16) à orientation horizontale, disposé entre deux dispositifs de transport (12, 13) espacés dans l'espace libre ainsi constitué, que plusieurs sphères (17) sont montées en rotation libre sur le plateau rotatif (16) de sorte que les portions supérieures (19) des sphères et les portions inférieures (20) des sphères s'étendent au-delà des faces plates du plateau rotatif (16), qu'un convoyeur à courroie (21) est disposé en-dessous du plateau rotatif (16) de sorte que le brin (22) supérieur du convoyeur à courroie (21) est en contact avec les portions inférieures (20) de la sphère et se déplace en sens contraire au sens de transport (15) des dispositifs de transport (12, 13), que le plateau rotatif (16) est disposé sur un coulisseau (29) qui est déplaçable dans un sens ou dans l'autre sur le bâti de machine transversalement au sens de transport, pour déplacer les marchandises (14) transversalement au sens de transport (15) et que des moyens d'entraînement (23) sont prévus sur le coulisseau (29) faisant tourner le plateau rotatif (16) autour de son axe vertical pour faire tourner la marchandise (14), **caractérisé en ce que** le coulisseau (29) déplace le plateau rotatif (16) sur le convoyeur à courroie (21).

2. Dispositif selon la revendication 1, **caractérisé en ce que** les moyens d'entraînement (23) pour le plateau rotatif comportent au moins une courroie (24) qui s'applique à la surface périphérique (25) extérieure pour faire tourner le plateau rotatif autour de son axe de rotation vertical.

3. Dispositif selon la revendication 2 ou 3, **caractérisé en ce que** les moyens d'entraînement pour le plateau rotatif présentent au moins une roue dentée qui s'engrène dans une dentition correspondante sur le plateau rotatif pour faire tourner le plateau rotatif autour son axe de rotation vertical.

4. Dispositif selon la revendication 2 ou 3, **caractérisé en ce que** les moyens d'entraînement pour le plateau rotatif présentent au moins une roue de friction qui est adjacente par friction sur la surface périphérique extérieure sur le plateau rotatif pour faire tourner le plateau rotatif autour de son axe de rotation vertical.

5. Dispositif selon la revendication 2, **caractérisé en ce que** la courroie (24) s'applique à au moins trois et notamment quatre endroits espacés dans le sens circonférentiel (au niveau de 26) sur la surface périphérique (25) du plateau rotatif (16).

6. Dispositif selon l'une des revendications 1 à 5, **caractérisé en ce que** le diamètre du plateau rotatif (16) correspond ou est supérieur à la largeur du dispositif de transport (12, 13).

7. Dispositif selon l'une des revendications 1 à 6, **caractérisé en ce que** le plateau rotatif (16) comporte un châssis présentant une pluralité de cavités (18) dans lesquelles les sphères (17) sont maintenues de manière anti-perte.

8. Dispositif selon les revendications 1 à 7, **caractérisé en ce que** le plateau rotatif (16) se compose d'au moins deux disques à trou (31, 32) horizontaux, dont les cavités (33, 34) aux sections transversales circulaires sont alignées dans leur position montée et constituent les logements (18) pour les sphères (17) et que les cavités (33, 34) au moins du disque à trou suprême et inférieur extrême (31, 32) présentent le contour d'une zone sphérique et que le diamètre de la sphère creuse constituant la zone sphérique correspond au diamètre des sphères (17) ou dépasse leur taille légèrement.

9. Dispositif selon la revendication 8, **caractérisé en ce qu'**au moins un disque à trou moyen (35) est prévu entre le disque à trou inférieur extrême et le disque à trou suprême (31, 32) et qui est muni de perforations cylindriques, circulaires (36) alignées aux cavités (33, 34) dans les disques à trou (31, 32) suprêmes et inférieurs extrêmes et présentent un diamètre qui correspond au diamètre des sphères (17) ou dépasse sa taille légèrement.

10. Dispositif selon les revendications 1 à 9, **caractérisé en ce que** le plateau rotatif (16) se compose d'un disque à trou (31, 32) suprême et l'un inférieur extrême ainsi que d'au moins un disque à trou moyen (35), que les disques à trou (31, 32, 35) empilés présentent des perforations cylindriques, circulaires (36, 37) qui sont alignées dans leur position montée, que les perforations 36 du disque à trou moyen (35) présentent un diamètre qui correspond au diamètre des sphères (17) ou dépasse leur taille légèrement, que le diamètre de l'ouverture de la perforation (37) cylindrique, circulaire du disque à trou (31, 32) suprême et/ou inférieur extrême est inférieur au diamètre de la sphère (17), fait face au disque à trou (35) moyen et correspond à un diamètre de petit cercle de la sphère (17) ou dépasse sa taille légèrement.

11. Dispositif selon l'une des revendications 1 à 10, **caractérisé en ce que** la surface des sphères (17) est rugueuse ou revêtue d'un revêtement antidérapant.
